# EUROPÄISCHE PATENTSCHRIFT

(11) **EP 1 312 461 B1**
(45) Veröffentlichungstag und Bekanntmachung des Hinweises auf die Patenterteilung: **12.01.2005**
(21) Anmeldenummer: 03000902.1
(22) Anmeldetag: 21.11.2000
(51) Int. Cl.: B29C 65/76, B29C 65/54, B29C 65/42

(54) **Fügeverbindung und Verfahren zur Herstellung einer Fügeverbindung**
Joining connection and process for producing a joining connection
Joint de connexion et procédé pour fabriquer un joint de connexion

(30) Priorität: 24.11.1999 DE 19956422
(43) Veröffentlichungstag der Anmeldung: 21.05.2003
(62) Teilanmeldung aus: 00125465.5
(73) Patentinhaber: Hella KGaA Hueck & Co., 59552 Lippstadt (DE)
(72) Erfinder: Flerlage, Horst, 59555 Lippstadt (DE); Rohrberg, Simone, 59558 Lippstadt (DE); Schmidt, Stephan, 59558 Lippstadt (DE); Temme, Ulrich, Dr., 59558 Lippstadt (DE)

(56) Entgegenhaltungen:
- EP-A- 0 412 272
- DE-A- 19 739 114

## Beschreibung

Die Erfindung betrifft eine Fügeverbindung zwischen einem ersten und einem zweiten Bauteil nach dem Oberbegriff des Patenanspruchs 1.

Die Erfindung betrifft weiterhin ein Verfahren zur Herstellung einer Fügeverbindung zwischen einem ersten und einem zweiten Bauteil nach dem Oberbegriff des Patentanspruchs 11.

Insbesondere bei Scheinwerfern von Kraftfahrzeugen sind Fügeverbindungen bekannt, bei denen ein erstes Bauteil, beispielsweise ein Scheinwerfergehäuse, ein u-förmiges Dichtungsbett an einer ersten Seitenwand aufweist, in das ein zweites Bauteil, beispielsweise eine Abschluss- bzw. Abdeckscheibe, mit einer zweiten Seitenwand einfügbar ist, so dass beide Bauteil miteinander abdichtend verbindbar sind.

Nachteilig dabei ist, dass bei Verwendung solcher u-förmigen Profile des Dichtungsbettes die Klebdichtmasse beim Entfernen nicht einfach herausgezogen werden kann, da wegen vorhandener Hinterschnitte und Ecken die Gefahr des Abreißens vorgegeben ist. Zum Entfernen der Klebdichtmasse müssen daher die beiden Bauteile vorher demontiert und die Klebdichtmasse mühsam entfernt werden.

Angesichts zunehmender Bemühungen, Produkte nach ihrem Einsatz als Gebrauchsgegenstand stofflich zu recyceln, besteht ein Bedarf an montageund demontagefreundlichen Verbindungstechniken.

Weiterhin ist aus der DT 1 604 736 eine Fügeverbindung bekannt, bei der die Seitenwand eines ersten Bauteiles ein u-förmiges Dichtungsbett aufweist, in das die Seitenwandung eines zweiten Bauteiles eingefügt ist, wobei eine Klebdichtmasse nach dem Zusammenfügen über seitliche Öffnungen in das Dichtungsbett eingebracht wird. Auch hierbei ist nachteilig, dass die Klebdichtmasse nur sehr schwer rückstandsfrei zu entfernen ist.

Aus der EP A 0 412 272 ist eine Fügeverbindung zwischen einem ersten Bauteil und einem zweiten Bauteil bekannt, die einander benachbarte Seitenwände aufweisen. Die Seitenwände weisen jeweils eine Dichtfläche auf, entlang derer sich ein Dichtungsbett in einer ebenen Verlaufsrichtung erstreckt. In dem Dichtungsbett ist eine Klebdichtmasse angeordnet, mittels derer eine feste und dichte Verbindung der Seitenwände ermöglicht wird.

Aufgabe der vorliegenden Erfindung ist es, die bekannten Fügeverbindungen, insbesondere die Gestaltung der Geometrie ihres Dichtungsbettes so zu verbessern, dass die Klebdichtmasse weitgehend rückstandsfrei ohne aufwendige vorherige Montage und ohne Gefahr des Abreißens zu entfernen ist.

Diese Aufgabe wird durch die Merkmale des Patentanspruchs 1 gelöst.

Dadurch, dass die beiden Dichtflächen das Dichtungsbett mit einer von den beiden Seiten weggerichteten ebenen Verlaufrichtung bilden, muss die Klebdichtmasse beim Entfernen nicht über Hinterschnitte und Ecken gezogen werden, so dass ohne vorherige Demontage der beiden Bauteile die Klebdichtmasse durch Erfassen eines aus dem Dichtungsbett herausstehenden Teils einfach und nahezu rückstandsfrei aus dem Dichtungsbett herausziehbar ist. Die Gefahr des Abreißens besteht dabei praktisch nicht.

Gemäß einer bevorzugten Ausführungsform der Erfindung ist die Verlaufsrichtung des Dichtungsbettes gegenüber der ersten Seitenwand um einen Neigungswinkel α geneigt. Der Neigungswinkel α weist einen Wert zwischen 10° und 90° auf. Durch die Schräge des Neigungswinkels α kann dabei gleichzeitig eine Zentrierung der beiden Bauteile erfolgen. Eine Zentrierung lässt sich aber auch über einen Zentrieransatz am zweiten Bauteil erreichen, der zweckmäßigerweise eine Anlaufschräge zum leichten Einführen des ersten Bauteiles aufweist.

Nach einer weiteren bevorzugten Ausführungsform der Erfindung sind die beiden Bauteile miteinander durch den Dichtflächen benachbarte Verbindungsmittel lagefixiert. Durch Verbindungsmittel, wie c-förmigen Federn oder Klammern oder auch Rasthaken, lassen sich die Bauteile relativ einfach in ihrer Lage fixieren.

Nach einer weiteren bevorzugten Ausführungsform der Erfindung schlägt die erste Seitenwand mit einer an ihrem freien Ende angeordneten Stirnfläche gegen eine Innenfläche des zweiten Bauteiles. Die Stirnfläche weist dabei kegelige Spitzen auf, gegen die die Innenfläche des zweiten Bauteiles drückbar ist. Durch die kegeligen Spitzen kann dem bei der Klebdichtmasse auftretenden Schwund durch Abkühlung entgegengewirkt werden. Durch nachträgliches Andrücken des zweiten Bauteiles lassen sich die Kegelspitzen verformen. Während dieses Andrückvorganges kann dann gleichzeitig die endgültige Lagefixierung des zweiten Bauteiles mittels der Verbindungsmittel erfolgen.

Die erfindungsgemäße Fügeverbindung ist speziell für Beleuchtungseinrichtungen für Kraftfahrzeuge geeignet, da hier für Recyclingzwecke ein besonderer Bedarf an einer stofflichen Trennung besteht. Als stofflich getrennt gilt ein gelöster Verbund im Sinne der vorliegenden Erfindung auch, wenn noch mikroskopisch erkennbare Filme von Kleberharzanhaftungen an den Substraten verbleiben. Diese sollte jedoch typischerweise Schichtdicken kleiner als 5 µm aufweisen, vorzugsweise jedoch nicht nachweisbar sein.

Die erfindungsgemäßen Heißschmelzklebdichtstoffe sind besonders zur Verbindung von Gläsern und glasartigen Kunststoffsubstraten mit thermo-plastischen oder duroplastischen Kunststoffsubstraten geeignet. Die zu fügenden Substrate im Kraftfahrzeugleuchten- und -scheinwerferbereich umfassen insbesondere Polypropylen als Gehäusewerkstoff, Glas und Polymethylmethacrylat oder Polycarbonat sowie Cycloolefincopolymer als Material für die Abdeckscheiben bzw. Streuscheiben oder Lichtscheiben. Ebenso können aber auch andere Kunststoffe dafür eingesetzt werden. Allen Abdichtungs- und Klebeproblemen gleich bei Leuchten ist die originale beziehungsweise durch den vorausgegangenen Formgebungsprozess vorgegebene Substratoberfläche, d. h. diese ist nicht wesentlich modifiziert.

Das ist bei Scheinwerfern mit Kunststoffstreuscheiben, bedingt durch die Kratzfestbeschichtung, anders. Hier muss auf eine Fülle von verschiedenen möglichen Substratoberflächen mit fließenden Eigenschaftensänderungen zwischen diesen eine ausreichende Haftung an dem Streuscheibenfuß erzeugt werden.

Die bekannten Verfahren zur Herstellung einer Fügeverbindung weisen die oben genannten Nachteile von Fügeverbindungen auf.

Weitere Aufgabe der Erfindung ist es daher, die bekannten Verfahren so zu verbessern, dass die Klebdichtmasse relativ einfach und vollständig entfernt werden kann.

Diese Aufgabe wird erfindungsgemäß durch die Merkmale des Patentanspruchs 11 gelöst

Dadurch, dass die Klebdichtmasse durch Erfassen eines aus dem Dichtungsbett herausstehenden Endes in Verlängerung einer ebenen von den beiden Bauteilen weggerichteten Verlaufsrichtung des Dichtungsbettes herausgezogen wird, wird ein Abreißen der Klebdichtmasse vermieden und diese nahezu rückstandsfrei aus dem Dichtungsbett entfernt, ohne dass eine vorherige Demontage der Bauteile nötig wäre.

Nach einer weiteren bevorzugten Ausführungsform der Erfindung wird die Klebdichtmasse mittels einer Tankschmelzanlage mit Roboterführung auf den Dichtungsbettbereich des ersten Bauteils flüssig aufgetragen. Dadurch wird eine einfache, schnelle und gleichmäßige Auftragung der Klebdichtmasse ermöglicht. Das anschließende Zusammenfügen der beiden Bauteile kann manuell oder automatisch erfolgen.

Nach einer weiteren bevorzugten Ausführungsform der Erfindung wird nach dem Fügen des zweiten Bauteils und einer kurzen Abkühlungsphase das zweite Bauteil gegen das erste Bauteil angedrückt und mittels Verbindungsmitteln endgültig lagefixiert. Durch nachträgliches Andrücken des zweiten Bauteiles lassen sich an der Stirnseite der Seitenwand des ersten Bauteiles angeordnete Kegelspitzen durch das zweite Bauteil verformen. Während dieses Andrückvorganges kann dann gleichzeitig die endgültige Lagefixierung des zweiten Bauteiles mittels der Verbindungsmittel erfolgen.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

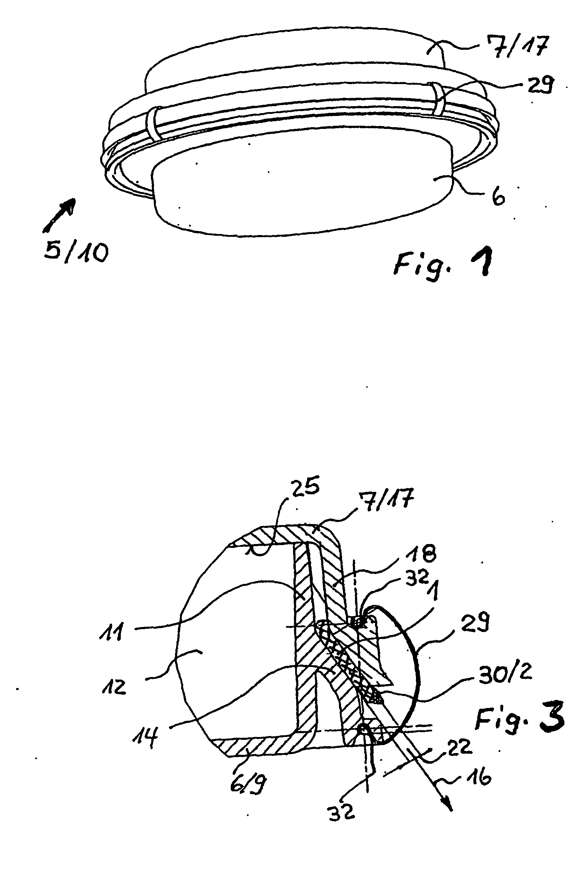

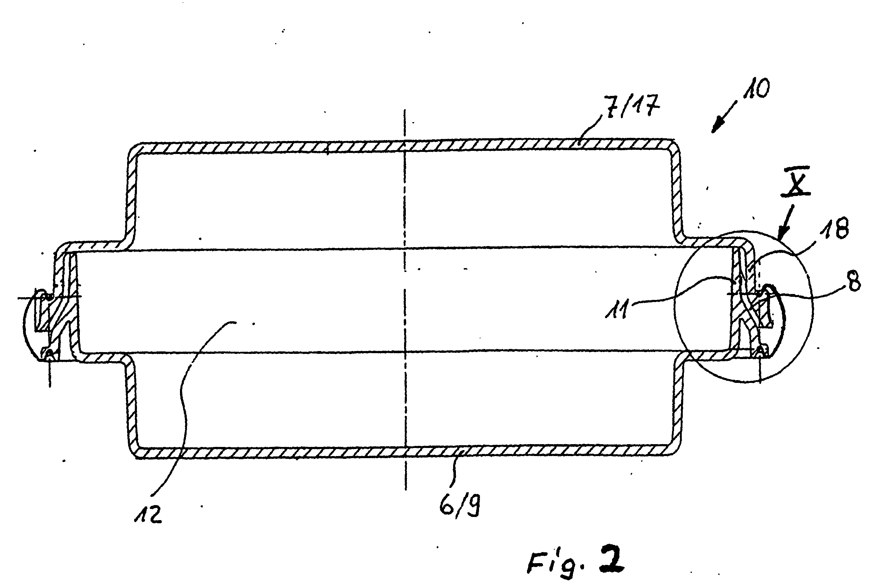

- Figur 1:: eine räumliche Ansicht einer Fügeverbindung in verkleinerter Darstellung,
- Figur 2:: eine Seitenansicht der Fügeverbindung von Figur 1 im Schnitt ohne Klebdichtmasse,
- Figur 3:: eine vergrößerte Darstellung der Einzelheit X von Figur 2 mit Klebdichtmasse,
- Figur 4:: eine Seitenansicht der ersten Seitenwand von dem ersten Bauteil von Figur 3 und

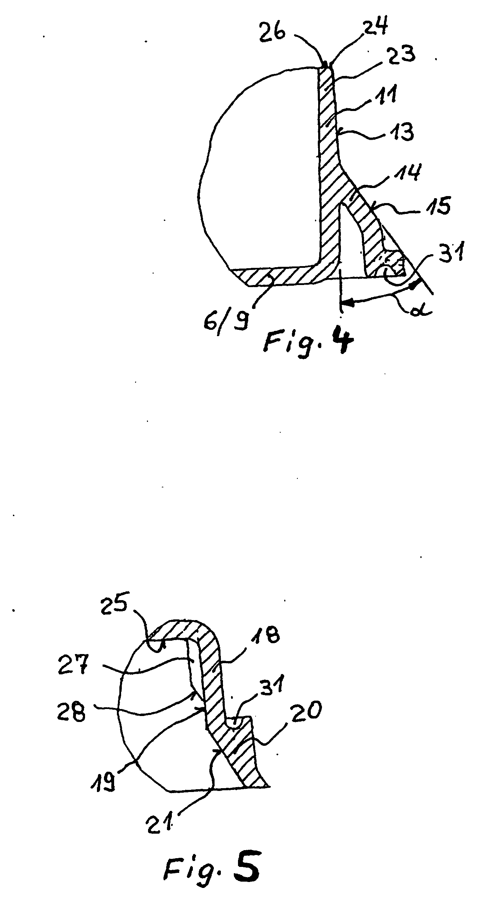

- Figur 5:: eine Seitenansicht der zweiten Seitenwand von dem zweiten Bauteil von Figur 3.

Eine Fügeverbindung 5 besteht im Wesentlichen aus einem ersten Bauteil 6, einem zweiten Bauteil 7, einem Dichtungsbett 8 und einer Klebdichtmasse 1.

Das erste Bauteil 6 ist als ein Gehäuseboden 9, beispielsweise eines Scheinwerfergehäuses 10, ausgebildet und weist eine umlaufende erste Seitenwand 11 auf. An einer einem Gehäuseinnenraum 12 abgewandten Außenseite 13 der ersten Seitenwand 11 ist ein unteres Dichtungsbettteil 14 mit einer ersten Dichtfläche 15 angeordnet. Die erste Dichtfläche 15 ist gegenüber der ersten Seitenwand 11 um einen Neigungswinkel α geneigt, der im Beispiel 30° beträgt. Die erste Dichtfläche 15 bestimmt mit ihrem Neigungswinkel α zugleich die Verlaufsrichtung 16 des Dichtungsbettes 8, die somit ebenfalls um den Neigungswinkel α gegenüber der ersten Seitenwand 11 geneigt ist.

Das zweite Bauteil 7 ist als ein Gehäusedeckel bzw. eine transparente Abdeckscheibe 17 des Scheinwerfergehäuses 10 ausgebildet und weist eine umlaufende zweite Seitenwand 18 auf, die der ersten Seitenwand 11 des ersten Bauteiles 6 benachbart ist. An einer dem Gehäuseinnenraum 12 zugewandten Innenseite 19 der zweiten Seitenwand 18 ist ein oberes Dichtungsbettteil 20 mit einer zweiten Dichtfläche 21 angeordnet. Die zweite Dichtfläche 21 ist im zusammengefügten Zustand der beiden Bauteile 6, 7 in einem Abstand 22 parallel zur ersten Dichtfläche 15 angeordnet und damit ebenfalls gegenüber der ersten Seitenwand 11 um den Neigungswinkel α geneigt. Die beiden Dichtflächen 15, 21 begrenzen somit das aus dem unteren Dichtungsbettteil 14 und dem oberen Dichtungsbettteil 20 bestehende Dichtungsbett 8.

Die erste Seitenwand 11 weist an ihrem dem zweiten Bauteil 7 bzw. der Abdeckscheibe 17 zugewandten freien Ende 23 eine Stirnfläche 24 auf, die gegen eine Innenfläche 25 des zweiten Bauteils 7 bzw. der Abdeckscheibe 17 anschlägt.

Nach einem Ausführungsbeispiel weist die Stirnfläche 24 kegelige Spitzen 26 auf, die gegen die Innenfläche 25 so drückbar sind, dass sie sich verformen und die seitliche Lagefixierung der beiden Bauteile 6, 7 unterstützen.

Der zweiten Seitenwand 18 auf ihrer Innenseite 19 zur ersten Seitenwand 11 hin vorgelagert ist ein Zentrieransatz 27. Der Zentrieransatz weist an seinem der Innenfläche 25 des zweiten Bauteils 7 abgewandten Ende eine Anlaufschräge 28 auf, die zum lagerichtigen Positionieren der beiden Bauteile 6, 7 gegeneinander beiträgt.

Die beiden Dichtungsbettteile 14, 20 weisen einander entgegengesetzt gerichtete Ausformungen 31 auf, in die die Enden 32 der c-förmigen Verbindungsmittel 29 einsetzbar sind.

Zum Zusammenfügen der beiden Bauteile 6, 7 wird die Klebdichtmasse 1 mittels einer nicht dargestellten Tankschmelzanlage mit Roboterführung auf den Dichtungsbettbereich des ersten Bauteils 6, d. h. auf die erste Dichtfläche 15 flüssig aufgetragen. Anschließend wird das zweite Bauteil 7 über das erste Bauteil 6 gefügt, so dass die Stirnfläche 24 gegen die Innenfläche 25 schlägt. Das Zusammenfügen der beiden Bauteile 6, 7 kann manuell oder automatisch erfolgen.

Nach dem Fügen des zweiten Bauteils 7 und einer kurzen Abkühlungsphase wird das zweite Bauteil 7 gegen das erste Bauteil 6 angedrückt und mittels Verbindungsmitteln 29, beispielsweise c-förmigen Federn, deren Enden 32 in die Ausformungen 31 der Dichtungsbettteile 14, 20 unter Spannung eingesetzt werden, endgültig lagefixiert. Durch das nachträgliches Andrücken des zweiten Bauteiles 7 lassen sich die an der Stirnfläche 24 der ersten Seitenwand 11 des ersten Bauteiles 6 angeordneten kegelige Spitzen 26 durch das zweite Bauteil 7 verformen. Zudem kann dem bei der Klebdichtmasse 1 durch Abkühlung auftretenden Schwund entgegengewirkt werden.

Nach dem Fügen des Verbundes bzw. der beiden Bauteile 6, 7 kann dieser wieder getrennt werden, indem ein aus der Fügeebene bzw. dem Dichtungsbett 8 herausstehender Teil 30 der Klebdichtmasse 1 oder eines extra mit der Klebemasse verbundenen Teiles als "Anfasser" oder ein "Öffner" verwendet wird. Dazu wird die Klebeverbindung des Verbundes bzw. der beiden Bauteile 6, 7 gelöst, indem an dem "Anfasser" in Richtung der Klebeebene, d. h. in Verlängerung der ebenen von den beiden Bauteilen 6, 7 weggerichteten Verlaufsrichtung 16 des Dichtungsbettes 8 gezogen wird, so dass die Klebdichtmasse 1 nahezu rückstandsfrei aus dem Dichtungsbett 8 herausgezogen wird.

## Patentansprüche

1. Fügeverbindung zwischen einem ersten Bauteil (6) und einem zweiten Bauteil (7), die einander benachbarte Seitenwände (11, 18) aufweisen und die über ein mit einer entfernbaren Klebdichtmasse (1) versehbares Dichtungsbett (8) dicht miteinander verbindbar sind, dass die erste Seitenwand (11) eine erste mit ihr verbundene Dichtfläche (15) aufweist, die im zusammengefügten Zustand in einem Abstand (22) etwa parallel zu einer zweiten Dichtfläche (21) verläuft, die mit der zweiten Seitenwand (18) verbunden ist, und dass die beiden Dichtflächen (15, 21) das Dichtungsbett (8) mit einer von den Seitenwänden (11, 18) weggerichteten ebenen Verlaufsrichtung (16) bilden, **dadurch gekennzeichnet, dass** die Klebdichtmasse (1) einen aus dem Dichtungsbett (8) herausstehenden Teil (30) aufweist, derart, dass die Klebdichtmasse (1) in der Verlängerung der von den Seitenwänden (11, 18) weggerichteten ebenen Verlaufsrichtung (16) herausziehbar ist.

2. Fügeverbindung nach Anspruch 1, **dadurch gekennzeichnet, dass** die Verlaufsrichtung (16) des Dichtungsbettes (8) gegenüber der ersten Seitenwand (11) um einen Neigungswinkel (α) geneigt ist.

3. Fügeverbindung nach Anspruch 2, **dadurch gekennzeichnet, dass** der Neigungswinkel (α) zwischen 0° und 180° beträgt.

4. Fügeverbindung nach Anspruch 3, **dadurch gekennzeichnet, dass** der Neigungswinkel (α) zwischen 0° und 90° beträgt.

5. Fügeverbindung nach Anspruch 4, **dadurch gekennzeichnet, dass** der Neigungswinkel (α) ca. 30° beträgt.

6. Fügeverbindung nach einem der Ansprüche 1 bis 5, **dadurch gekennzeichnet, dass** die beiden Bauteile (6, 7) miteinander durch den Dichtflächen (15, 21) benachbarte Verbindungsmittel (29) lagefixiert sind.

7. Fügeverbindung nach einem der Ansprüche 1 bis 6, **dadurch gekennzeichnet, dass** die erste Seitenwand (11) mit einer an ihrem freien Ende (23) angeordneten Stirnfläche (24) gegen eine Innenfläche (25) des zweiten Bauteils (7) anschlägt und das die Stirnfläche (24) kegelige Spitzen (26) aufweist, gegen die die Innenfläche (25) des zweiten Bauteiles (7) drückbar ist.

8. Fügeverbindung nach einem der Ansprüche 1 bis 7, **dadurch gekennzeichnet, dass** das erste Bauteil (6) als ein Scheinwerfergehäuse (10) und das zweite Bauteil (7) als eine Abdeckscheibe (17) eines Fahrzeugscheinwerfers ausgebildet ist.

9. Fügeverbindung nach Anspruch 8, **dadurch gekennzeichnet, dass** die Abdeckscheibe (17) aus einem glasartigen Kunststoffsubstrat und das Scheinwerfergehäuse (10) aus einem thermoplastischen oder duroplastischen Kunststoffsubstrat ausgebildet ist.

10. Fügeverbindung nach Anspruch 8, **dadurch gekennzeichnet, dass** die glasartigen Kunststoffsubstrate ausgewählt sind aus Polymethylmethacrylat, Polycarbonat oder Cycloolefincopolymer und insbesondere die thermoplastischen Kunststoffsubstrate ausgewählt sind aus Polypropylen.

11. Verfahren zur Herstellung einer Fügeverbindung (5) zwischen einem ersten Bauteil (6) und einem zweiten Bauteil (7), bei dem auf einen Dichtungsbettbereich des ersten Bauteils (6) eine entfernbare Klebdichtmasse (1) in flüssigem Zustand aufgetragen und die beiden Bauteile (6, 7) zusammengefügt werden, **dadurch gekennzeichnet, dass** zum Entfernen der Klebdichtmasse (1) diese an einem aus dem Dichtungsbett (30) herausstehenden freien Ende (30) erfasst und in Verlängerung einer ebenen von den beiden Bauteilen (6, 7) weggerichteten Verlaufsrichtung (16) des Dichtungsbettes (8) aus diesem nahezu rückstandsfrei herausgezogen wird.

12. Verfahren nach Anspruch 11, **dadurch gekennzeichnet, dass** die Klebdichtmasse (1) mittels einer Tankschmelzanlage mit Roboterführung auf eine am ersten Bauteil (6) angeordnete erste Dichtfläche (15) eines unteren Dichtungsbettteiles (14) des Dichtungsbettes (8) flüssig aufgetragen wird und in einem anschließenden Arbeitsgang die beiden Bauteile (6, 7) zusammengefügt werden.

13. Verfahren nach Anspruch 11 oder 12, **dadurch gekennzeichnet, dass** nach dem Fügen des zweiten Bauteils (7) und einer kurzen Abkühlungsphase das zweite Bauteil (7) gegen das erste Bauteil (6) angedrückt und mittels Verbindungsmitteln (29) endgültig lagefixiert wird.

## Claims

1. Joining connection between a first part (6) and a second part (7) that have adjacent lateral faces (11, 18) and that can be connected, flush, to each other by means of a sealing layer (8) that can be provided with adhesive, sealing matter (1) that can be removed, and a first lateral face (11) concerned has a first sealing surface (15), attached to it, that, in the joined state, runs approximately parallel to a second sealing surface (21) at a separation (22) from the latter, the said second sealing surface (15) being attached to a second lateral face (18), and both sealing surfaces (15, 21) form the sealing layer (8) that follows a level course (16) that is directed away from the lateral faces (11, 18), **characterized in that** the adhesive, sealing matter (1) has a part (30) that projects from the sealing layer (8) such that the adhesive, sealing matter (1) can be drawn out in the extension direction of the level course (16) that is directed away from the lateral faces (11, 18).

2. Joining connection in accordance with claim 1, **characterized in that** the course (16) of the sealing layer (8) is inclined at an angle (α) to the first lateral face (11).

3. Joining connection in accordance with claim 2, **characterized in that** the angle of inclination (α) is between 0° and 180°.

4. Joining connection in accordance with claim 3, **characterized in that** the angle of inclination (α) is between 0° and 90°.

5. Joining connection in accordance with claim 4, **characterized in that** the angle of inclination (α) is between 0° and approximately 30°.

6. Joining connection in accordance with one of claims 1 to 5, **characterized in that** the two parts (6, 7) are fixed to each other in their position by means of connection means (29) adjacent to the sealing surfaces (15, 21).

7. Joining connection in accordance with one of claims 1 to 6, **characterized in that** the first lateral face (11) abuts, with an end face (24) on its free end (23), against an inner face (25) of the second part (7) and **in that** the end face (24) has cone-form tips (26) against which the inner face (25) of the second part can be pressed.

8. Joining connection in accordance with one of claims 1 to 7, **characterized in that** the first part (6) is formed as a headlight casing (10) and the second part is developed as a cover plate (17) of a vehicle headlight.

9. Joining connection in accordance with claim 8, **characterized in that** the cover plate (17) is developed from a glass-like synthetic substrate and the headlight casing (10) is formed from a thermoplastic or thermosetting synthetic substrate.

10. Joining connection in accordance with claim 8, **characterized in that** the glassy synthetic substrates are selected from polymethacrylate, polycarbonate or cycloolefin copolymers and, in particular, the thermoplastic synthetic substrates are selected from polypropylenes.

11. Process for producing a joining connection (5) between a first part (6) and a second part (7), in which a removable adhesive sealing material (1) is applied, in liquid state, onto a sealing layer area of the first part (6) and the two parts (6, 7) are joined together, **characterized in that**, in order to remove the adhesive, sealing matter (1) this is picked up on a free end (30) projecting from the sealing layer (30) and is drawn out, leaving almost no residue, in a line that is an extension of a plane of a course (16), of the sealing layer (8), directed away from the two parts (6, 7).

12. Process in accordance with claim 11, **characterized in that** the adhesive, sealing mass (1) is applied, by means of a tank melting unit controlled by a robot, as a liquid, to a first sealing surface (15), of a lower sealing layer section (14) of the sealing layer (8), on the first part (6), and the two parts (6, 7) are joined in a subsequent work process.

13. Process in accordance with claim 11, **characterized in that** after joining the second part (7) and a short cooling stage, the second part (7) is pressed against the first part (6) and is finally fixed into position through connection means (29).

## Revendications

1. Assemblage de jonction entre un premier élément (6) et un second élément (7), qui comportent des parois latérales (11, 18) voisines l'une de l'autre et qui peuvent être assemblés l'un à l'autre de manière étanche par le biais d'un lit d'étanchéité (8) qui peut être muni d'une masse d'étanchéité par collage (1) qui peut être retirée, de telle sorte que la première paroi latérale (11) comporte une première surface d'étanchéité (15) reliée à celle-ci, qui, à l'état joint, s'étend à une distance (22) sensiblement parallèlement à une seconde surface d'étanchéité (21) qui est reliée à la seconde paroi latérale (18), et que les deux surfaces d'étanchéité (15, 21) forment le lit d'étanchéité (8) avec une surface d'étendue (16) plane qui s'écarte des parois latérales (11, 18), **caractérisé en ce que** la masse d'étanchéité par collage (1) comporte une partie (30) qui fait saillie du lit d'étanchéité (8) de telle manière que la masse d'étanchéité par collage (1) peut être retirée dans le prolongement de la direction d'étendue (16) plane qui s'éloigne des parois latérales (11, 18).

2. Assemblage de jonction selon la revendication (1), **caractérisé en ce que** la direction d'étendue (16) du lit d'étanchéité (8) est inclinée d'un angle d'inclinaison (α) par rapport à la première paroi latérale (11).

3. Assemblage de jonction selon la revendication 2, **caractérisé en ce que** l'angle d'inclinaison (α) est de 0° à 180°.

4. Assemblage de jonction selon la revendication 3, **caractérisé en ce que** l'angle d'inclinaison (α) est de 0° à 90°.

5. Assemblage de jonction selon la revendication 4, **caractérisé en ce que** l'angle d'inclinaison (α) est d'environ 30°.

6. Assemblage de jonction selon l'une des revendications 1 à 5, **caractérisé en ce que** les deux éléments (6, 7) peuvent être fixés en position ensemble par des moyens d'assemblage (29) voisins des surfaces d'étanchéité (15, 21).

7. Assemblage de jonction selon l'une des revendications 1 à 6, **caractérisé en ce que** la première paroi latérale (11) vient en contact par une surface frontale (24) disposée au niveau de son extrémité libre (23) avec une surface interne (25) du second élément (7) et **en ce que** la surface frontale (24) comporte des pointes coniques (26) qui peuvent être pressées contre la surface interne (25) du second élément (7).

8. Assemblage de jonction selon l'une des revendications 1 à 7, **caractérisé en ce que** le premier élément (6) est agencé sous forme d'un boîtier de phare (10) et le second élément (7) est agencé sous forme d'une plaque de recouvrement (17) d'un phare de véhicule automobile.

9. Assemblage de jonction selon la revendication 8, **caractérisé en ce que** la plaque de recouvrement (17) est constituée par un substrat en matière plastique vitreux et le boîtier de phare (10) est constitué par un substrat en matière plastique thermoplastique ou thermodurcissable.

10. Assemblage de jonction selon la revendication 8, **caractérisé en ce que** les substrats en matière plastique vitreux sont choisis parmi le poly(méthacrylate de méthyle), le polycarbonate ou un copolymère de cyclo-oléfine et en particulier les substrats en matière plastique thermoplastique sont choisis parmi le polypropylène.

11. Procédé de production d'un assemblage de jonction (5) entre un premier élément (6) et un second élément (7), dans lequel une masse d'étanchéité par collage (1) pouvant être retirée est appliquée à l'état liquide sur un domaine de lit d'étanchéité du premier élément (6) et les deux éléments (6, 7) sont joints ensemble, **caractérisé en ce que**, pour retirer la masse d'étanchéité par collage (1), celle-ci est saisie au niveau d'une extrémité libre (30) qui fait saillie du lit d'étanchéité (30) et est retirée du lit d'étanchéité (8) sensiblement sans résidu dans le prolongement d'une direction d'étendue (16) plane du lit d'étanchéité (8) qui s'écarte des deux éléments (6, 7).

12. Procédé selon la revendication 11, **caractérisé en ce que** la masse d'étanchéité par collage (1) est appliquée à l'état liquide au moyen d'une installation de fusion en réservoir à guidage robotisé sur une première surface d'étanchéité (15) d'une partie inférieure de lit d'étanchéité (14) du lit d'étanchéité (8) disposée sur le premier élément (6) et, dans une opération ultérieure, les deux éléments (6, 7) sont joints ensemble.

13. Procédé selon la revendication 11 ou 12, **caractérisé en ce que**, après la jonction du second élément (7) et une courte phase de refroidissement, le second élément (7) est pressé contre le premier élément (6) et fixé en position finale à l'aide de moyens d'assemblage (29).
